# EUROPÄISCHE PATENTSCHRIFT

(11) **EP 2 377 747 B1**
(45) Veröffentlichungstag und Bekanntmachung des Hinweises auf die Patenterteilung: **19.02.2014**
(21) Anmeldenummer: 11162655.2
(22) Anmeldetag: 15.04.2011
(51) Int. Cl.: B62D 25/14, B62D 29/00

(54) **Querträgermodul für ein Kraftfahrzeug**
Cross-member module for a motor vehicle
Module de traverse pour un véhicule automobile

(30) Priorität: 15.04.2010 EP 10160060
(43) Veröffentlichungstag der Anmeldung: 19.10.2011
(73) Patentinhaber: LANXESS Deutschland GmbH, 50569 Köln (DE)
(72) Erfinder: Malek, Thomas, 50259 Pulheim (DE); Koch, Boris, 42929 Wermelskirchen (DE); Dajek, Ulrich, 51375 Leverkusen (DE)

(56) Entgegenhaltungen:
- DE-A1- 10 022 360
- DE-A1- 10 360 045
- DE-A1-102004 032 951
- DE-U1-202008 012 066

## Beschreibung

Die vorliegende Erfindung betrifft ein Kraftfahrzeug-Querträgermodul zur Aufnahme der Instrumententafel und Verstärkung der Karosserie für die direkte Verbindung beider A-Säulen eines Kraftfahrzeuges bestehend aus einem Querträger mit einem Lenkstockhalter, wobei das Querträgermodul, also sowohl der Querträger als auch der Lenkstockhalter, in Metall-Kunststoff-Verbundbauweise (Hybridtechnik) gefertigt sind und diese aus wenigstens einem Grundkörper und wenigstens einem ersten thermoplastischen Kunststoffteil und einem zweiten thermoplastischen Kunststoffteil bestehen, die durch Spritzguss einerseits mit dem Grundkörper fest verbunden sind und gleichzeitig die verschiedenen Kunststoffteile miteinander verbunden sind, wobei die beiden Kunststoffteile aus unterschiedlichen Kunststoffmaterialien bestehen und diese nach dem Bi-Injektionsverfahren verspritzt werden wobei sie beim Aufeinandertreffen miteinander verschmelzen und gleichzeitig mit dem Metall einen festen Verbund eingehen.

Bekannte Lenkstockhalter, auch als Lenkkonsolen bezeichnet, bestehen aus mehreren verschweißten Blechprofilen in Stahl oder Druckgussbauteilen (wie z.B. aus Aluminium oder Magnesium) und sind mit der tragenden Struktur des Instrumententafelquerträgers zu Querträgermodulen verschweißt oder einstückig bzw. als kombinierte Profile aus Aluminium, Stahl, Magnesium oder mittels Kunststoff-Metall-Hybridbauweise fest verbunden.

Aus der DE 10 2005 004 605 A1 ist ein Querträgermodul für ein Kraftfahrzeug, umfassend ein Metallrohr das zumindest bereichsweise mit Kunststoff umgeben ist, bekannt, wobei ein Kunststoffkanal zur Führung eines Leitungssatzes einstückig angeformt ist und das eine aus Kunststoff angespritzte Anbindung aufweist, um mit der Stirnwand des Kraftfahrzeugs verschraubt zu werden.

Aus DE 102 40 395 A1 ist ein Querträger für ein Kraftfahrzeug bekannt, der im Bereich des Rohrbogens eine aus Metall angeschweißte Lenksäulenanbindung zeigt, woran die Anschraubplatte der Lenksäule montiert wird. Der Bogen dieses Querträgers ist in Metall-Kunststoff-Hybridbauweise gefertigt.

Aus DE 200 08 201 U1 ist ein Instrumententafelträger in hybridartiger Konfiguration zur Eingliederung zwischen die A-Säulen eines Kraftfahrzeugs bekannt, der einen länglichen, schalenförmigen Grundkörper sowie stabilisierende Einlegeteile aus metallischen Werkstoffen aufweist, welche durch eine angespritzte innere Kunststoffverrippung zu einem Metall/Kunststoff-Verbundteil gefügt sind und der von mindestens einem Luftführungskanal wenigstens teilweise durchsetzt ist, wobei mit der Kunststoffverrippung zugleich gegenüber dem Grundkörper nach außen vorspringende Halter, Konsolen und Anbindungspunkte aus Kunststoff einstückig angespritzt sind.

DE 100 64 522 A1 beschreibt ein Bauteil für ein Kraftfahrzeug, insbesondere Querträger zum Anordnen zwischen den A-Säulen eines Kraftfahrzeuges, mit einem im wesentlichen rohrartigen Grundkörper, in dem wenigstens ein Kanal vorgesehen ist. Um ein verbessertes Leichtbauteil bereitzustellen, das einfacher, mit weniger Arbeitsschritten und daher kostengünstiger herstellbar ist und in das in vorteilhafter Weise ein Kanal integrierbar ist, wird in DE 100 64 522 A1 vorgeschlagen, dass der Grundkörper innen mit Kunststoff zur Bildung von aus Kunststoff bestehenden Kanalwänden ausgekleidet ist. Dieses Bauteil kann als Instrumententafelträger in einem Kraftfahrzeug Verwendung finden. An den Grundkörper werden Halterungen angebracht, beispielsweise eine Lenksäulenhalterung, wobei diese Halterungen ebenfalls bevorzugt aus Metall bestehen. Die Halterungen können gemäß DE 100 64 522 A1 von Kunststoff umgeben sein, wodurch deren Steifigkeit erhöht, ein Klappern vermieden und ein Kantenschutz gegeben wird.

Aus DE 100 22 360 A1 ist ein Verbundbauteil aus zwei oder mehreren Profilen bekannt und ein Verfahren zu seiner Herstellung beschrieben, bei dem wenigstens ein Profil mit einem freien Ende an das zweite Profil angrenzt oder in das zweite Profil eintaucht, dadurch gekennzeichnet, dass im Bereich der Anschlussstelle der Profile Verstärkungselemente angebracht sind, die einen Formschluss mit den Profilen bilden, und dass die Profile durch im Bereich der Anschlussstelle angespritzten oder aufgeschrumpften thermoplastischen Kunststoff miteinander verbunden sind.

DE 103 60 045 A1 beschreibt einen Hybridquerträger für ein Fahrzeug mit einer metallischen Querstrebe mit einem in Hauptrichtung des Hybridquerträgers in der Form einer offenen Rinne verlaufenden Abschnitt, dessen Längskanten mit einem Sturkturelement aus Kunststoff in einem Abschnitt vorzugsweise durch eine Klebenaht verbunden sind.

Ferner wird ein Hybridquerträger für ein Fahrzeug vorgeschlagen mit einer metallischen Querstrebe, die einen in Richtung der Hauptrichtung des Hybridquerträgers in der Form einer offenen Rinne verlaufenden Abschnitt umfasst und einer daran außenmittig angebrachten Lenkstockanbindung sowie einer innerhalb des Profils der metallischen Querstrebe im Bereich der Lenkstockanbindung angeordneten Hilfsstrebe.

DE 10 2004 032 951 A1 betrifft ein Bauteil, insbesondere einen Querträger zum Anordnen zwischen A-Säulen eines Kraftfahrzeugs, mit einem im wesentlichen als Hohlprofil ausgebildeten Grundkörper, der innen mit einem Führungskanal versehen ist und mindestens eine Anbindung aufweist, an welche ein Anbauteil nachträglich in einem Verfahrensschritt integrierbar ist.

DE 20 2008 012 066 U1 zeigt ein Querträgermodul zur Aufnahme der Instrumententafel eines Kraftfahrzeugs umfassend ein Metallrohr das zumindest bereichsweise mit Kunststoff umgeben ist und ein als Lenkstockhalter fungierendes einfach geformtes Blechprofil das so konstruiert und platziert wird, dass es im Verbund mit angespritztem Kunststoff eine steife Verbindung einerseits zwischen Lenkstock und Stirnwand ergibt und andererseits mit dem Metallrohr über eine reine Kunststoffstruktur fest verbunden ist.

All den im Stand der Technik beschriebenen Lösungen der Verbindung von Lenkstockhalter und Querträger ist gemeinsam, dass sie entweder nur Halterungen aus Metall oder aus Kunststoff aufweisen, die erst in einem zusätzlichen Arbeitsgang eine Lenkkonsole aufnehmen, oder sofern die Lenkkonsole gleichzeitig mit dem Kunststoff für die Verrippung angespitzt wird, diese wie im Falle der DE 200 08 201 U1 allein aus Kunststoff besteht.

Die Folge der zweiteiligen Bauweise sind erhöhter Arbeitsaufwand, die Folge der reinen KunststoffLösung gemäß DE 200 08 201 U1 sind mangelnde Stabilität. Die im Stand der Technik dargestellten Lösungen zeigen zudem ein ungünstiges Schwingungsverhalten das sich bis ins Lenkrad hinein bemerkbar macht. Zwar weist DE 10 2005 004 605 A1 darauf hin, dass die vorgeschlagene Hybridbauweise des Querträgermoduls die Schwingungsmasse verringert, andererseits jedoch einen Querträger mit relativ hoher Eigenfrequenz schafft, wodurch man ein Querträgermodul mit hohem Schwingungskomfort erhält. Es hat sich jedoch gezeigt, dass sich bei veränderten Fahrzeugkonfigurationen dieses reduzierte Schwingungsverhalten allein des Querträgers nicht ausreicht sondern das Schwingungsverhalten sich in unangenehmer Weise trotzdem bis ins Lenkrad fortsetzt.

Nachteilig an den im Stand der Technik beschriebenen Kraftfahrzeug-Querträgermodulen ist zudem die Tatsache, dass im Falle verschiedener zu erfüllender Funktionen Funktionselemente mit ein und demselben Kunststoff an das Querträgermodul angespritzt werden. Beispielsweise in DE 100 64 522 A1 dient ein und derselbe Kunststoff dazu Luftaustrittsstutzen, Halterungen Anbindungselemente oder eine Kunststoffschale zu formen sowie deren Anbindung an den rohrförmigen Querträger sicherzustellen. Ein und derselbe Kunststoff übernimmt dabei sowohl Funktionen die unter Last stehen als auch Funktionen, die während des Betriebes eines Fahrzeugs keiner oder nur geringer Belastung ausgesetzt sind.

Eine Möglichkeit dies zu berücksichtigen ist der Einsatz der Mehrkomponententechnik. In der Mehrkomponententechnik unterscheidet man zwischen
- Bi-Injektion, also ein zeitgleiches Einspritzen zweier oder mehrerer Komponenten in dieselbe Kavität.
- Core-Back-Verfahren, also das Einspritzen zweier oder mehrerer Komponenten in Folge, wobei der Hohlraum für die 2. Komponente durch Ziehen eines Sperrschiebers freigestellt wird.
- Umsetz-Verfahren, also mit einem Vorspritzling der in eine 2. Kavität oder 2. Maschine umgesetzt wird bevor die 2. Komponente eingespritzt wird.
- Sandwich-Verfahren, also dem Schichtaufbau mit Außenhaut / Kern, wobei die Schichten nacheinander eingespritzt werden.

Die Aufgabe der vorliegenden Erfindung bestand deshalb darin, einerseits das Eigenschwingungsverhalten des gesamten Instrumententafelträgers mitsamt der Lenkkonsole und dem daran zu befestigenden Lenkstock (auch Lenksäule oder Mantelrohr genannt) dahingehend zu verbessern, dass einerseits eine erste Eigenfrequenz von > 36 Hz am Lenkrand gemessen wird und es zusätzlich bzw. andererseits gegenüber dem oben zitierten Stand der Technik zu einer weiteren Gewichtsreduktion, Kostenreduktion sowie zu vereinfachten Herstellprozessen kommt.

Die Schwierigkeit besteht nämlich darin, dass der Lenkstockhalter die Aufgabe hat, den Lenkstock aufzunehmen und als wichtiges Verbindungselement zwischen der Spritzwand (Bestandteil der tragenden Karosserie) und dem Instrumententafelquerträger dient. Hier muss der Lenkstockhalter eine möglichst steife Verbindung herstellen, die das Eigenschwingverhalten des Instrumententafelquerträgers maßgeblich beeinflusst. Die störenden Eigenschwingungen werden durch beispielsweise die Anregung des Motors, des Antriebstranges und des Fahrwerks verursacht. Diese Schwingungen übertragen sich über die Karosserie in die Lenkstange und in das Lenkrad, sowie in die gesamte Armaturentafel weiter und führen zu Vibrationen am Lenkrad und Geräuschen im Innenraum des Fahrzeuges. Es kommt zu nicht akzeptablen Komforteinbußen.

Die Lösung der Aufgabe und somit der Gegenstand der vorliegenden Erfindung ist ein Kraftfahrzeug-Querträgermodul zur Aufnahme der Instrumententafel eines Kraftfahrzeugs in Kunststoff-Metall-Hybridbauweise umfassend wenigstens einen Grundkörper aus Metall oder aus einem hochfesten Kunststoffmaterial, bevorzugt in Rohrform, der bereichsweise mit Kunststoff umgeben ist und ein als Lenkstockhalter fungierendes einfach geformtes Blechprofil das so konstruiert und platziert wird, dass es im Verbund mit wenigstens einem anzuspritzenden Kunststoff eine steife Verbindung einerseits zwischen Lenkstock und Stirnwand ergibt und andererseits mit dem Grundkörper bzw. über eine reine Kunststoffstruktur mit dem Grundkörper fest verbunden ist dadurch gekennzeichnet, dass über den Einsatz wenigstens zweier verschiedener Kunststoffe zudem Anbindungselemente für Funktionselemente zeitgleich angespritzt werden und die verschiedenen Kunststoffmaterialien den verschiedenen Kunststoffteilen einen festen Verbund miteinander ermöglichen indem die Schmelzefronten der verschiedenen Kunststoffmaterialien beim Aufeinandertreffen im Bi-Injektionsverfahren miteinander verschmelzen.

Überraschenderweise resultiert aus der festen Verbindung von Querträgermodul und einem ebenfalls in Hybridbauweise gefertigten Lenkstockhalter im Einbauzustand einerseits ein optimiertes Eigenschwingverhalten, also eine erste Eigenfrequenz von >36 Hz am Lenkrad, sowie eine Kosten-und Gewichtsreduktion des Gesamtfahrzeugs indem bisher aus Metall gefertigte Teile durch Kunststoff ersetzt werden können was zu einer weiteren Gewichtsreduktion von Kraftfahrzeugen beiträgt. Schließlich kann die erfindungsgemäße Kombination von Querträgermodul und Lenkstockhalter sowie Funktionselementen zum Anbau von Funktionsteilen in einem Arbeitsgang vereinfacht hergestellt werden, indem wenigstens zwei Grundkörper, beispielsweise ein Metallrohr und das geformte Blech sowie die Anbindungselemente für Funktionselemente in demselben Werkzeug in einem Arbeitsgang nach dem Bi-Injektionsverfahren miteinander umspritzt und verbunden werden wobei die verschiedenen Kunststoffe bzw. deren Schmelzefronten innerhalb derselben Kavitäten, wo diese aufeinander treffen, miteinander verschmelzen.

Überraschenderweise zeigen die Querträgermodule hergestellt durch Bi-Injektionsverfahren eine Festigkeit der Zusammenfließzone in zumindest der Höhe der Bindenahtfestigkeit eines konventionellen Ein-Kunststoff-Komponenten Bauteils, wobei das Querträgermodul selber ein geringeres Gewicht aufweist.

Die vorliegende Erfindung betrifft aber auch ein Verfahren zur Beeinflussung des Eigenschwingverhaltens des Instrumententafelträgers von Kraftfahrzeugen auf eine erste Eigenfrequenz > 36 Hz im Einbauzustand, dadurch gekennzeichnet, dass man ein Querträgermodul zur Anbringung unter der Instrumententafel eines Kraftfahrzeugs aus wenigstens einem Grundkörper aus Metall oder aus einem hochfesten Kunststoffmaterial, bevorzugt in Rohrform, der bereichsweise mit Kunststoff umgeben ist und ein als Lenkstockhalter fungierendes einfach geformtes Blechprofil so konstruiert und platziert, dass im Verbund mit wenigstens einem anzuspritzenden Kunststoff eine steife Verbindung einerseits zwischen Lenkstock und Stirnwand resultiert und andererseits mit dem Grundkörper bzw. über eine reine Kunststoffstruktur mit dem Grundkörper eine feste Verbindung erzielt wird wobei über den Einsatz wenigstens zweier verschiedener Kunststoffe zudem Anbindungselemente für Funktionselemente angespritzt werden, und die verschiedenen Kunststoffmaterialien den verschiedenen Kunststoffteilen einen festen Verbund miteinander ermöglichen indem diese beim Aufeinandertreffen im Bi-Injektionsverfahren miteinander verschmelzen.

Die vorliegende Erfindung betrifft aber auch die Verwendung eines Querträgermoduls zur Anbringung unter der Instrumententafel eines Kraftfahrzeugs umfassend einen Grundkörper, bevorzugt einen rohrförmigen Grundkörper, aus Metall oder einem hochfesten Kunststoffmaterial, bevorzugt aus Metall, der zumindest bereichsweise mit Kunststoff umgeben ist und einem als Lenkstockhalter fungierenden, einfach geformten Blechprofil das so konstruiert und platziert wird, dass es im Verbund mit angespritztem Kunststoff eine steife Verbindung einerseits zwischen Lenkstock und Stirnwand ergibt und andererseits mit dem Grundkörper über eine reine Kunststoffstruktur fest verbunden ist wobei über den Einsatz wenigstens zweier verschiedener Kunststoffe zudem Anbindungselemente für Funktionselemente angespritzt werden und die verschiedenen Kunststoffmaterialien den verschiedenen Kunststoffteilen einen festen Verbund miteinander ermöglichen indem diese beim Aufeinandertreffen im Bi-Injektionsverfahren miteinander verschmelzen zur Beeinflussung des Eigenschwingverhaltens des Instrumententafelträgers im Einbauzustand auf eine erste Eigenfrequenz > 36 Hz. In einer bevorzugten Ausführungsform beträgt die erste Eigenfrequenz 36,1 bis 50 Hz, besonders bevorzugt 37,1 bis 39 Hz. Bevorzugt wird das erfindungsgemäße Querträgermodul in Kraftfahrzeugen, besonders bevorzugt in Personenkraftwagen oder Lastkraftwagen eingesetzt.

In einer bevorzugten Ausführungsform beinhaltet die im Spritzgussvorgang erzeugte Kunststoffstruktur des Querträgermoduls Verstärkungsrippen aus einem der wenigstens zwei zu verwendenden verschiedenen Kunststoffe, die sowohl die Verbindung zum Instrumententafelquerträger aussteifen als auch die Abstützung und Unterstützung des umspritzten Blechprofiles übernehmen und eine großflächige Krafteinleitung in die Stirnwand bewirken. Die Verstärkungsrippen wiederum sind bevorzugt an diskreten Verbindungsstellen über Durchbrüche im Blechprofil, durch welche der Kunststoff hindurch und über die Flächen der Durchbrüche hinausreicht, mit diesem fest verbunden.

In einer bevorzugten Ausführungsform der vorliegenden Erfindung ist das für den Lenkstockhalter eingesetzte Blechprofil und/oder der metallene Grundkörper, bevorzugt ein Metallrohr, mit Haftvermittler oder Klebstoff beschichtet. Erfindungsgemäß einzusetzende Haftvermittler werden in DE 10 2006 025 745 A1 offenbart, deren Inhalt diesbezüglich von der vorliegenden Anmeldung vollumfänglich mit umfasst wird. Der Haftvermittler oder Klebstoff ist vorzugsweise ein zweistufiger Haftvermittler, der in zwei aufeinander folgenden Schritten, vorzugsweise durch thermische Aktivierung vollständig vernetzt. Der Haftvermittler oder Klebstoff kann auf das Blechprofil bzw. Metallmaterial vor dem Stanzen und/oder Formgeben, etc. aufgebracht werden. Ein solcher Auftrag erfolgt vorzugsweise im sogenannten Coil-Coating-Verfahren auf das Blechprofil vor dessen Bearbeitung. Dieses Verfahren ist besonders kosteneffizient. Der Haftvermittler oder Klebstoff kann aber auch durch Spritzen, Tauchen, Pulverspritzen, etc. aufgebracht werden. Nach dem Aufbringen auf das Blechprofil und/oder Metallrohr wird er in einem ersten Schritt teilvernetzt, so dass sich eine "staubtrockene Oberfläche" ausbildet, die ausreichend resistent gegen Handlings-Beschädigungen ist. Beim oder nach dem Kunststoffanspritzen wird der Haftvermittler oder Klebstoff vollständig vernetzt, so dass er seine endgültigen Eigenschaften erhält. Um die nötige Aktivierungsenergie für die zweite Phase des Vernetzers des Haftvermittlers zu erreichen, kann es günstig sein, das Kunststoffwerkzeug zu erwärmen und/oder das Einlegeblechprofil bzw. den metallenen Grundkörper, bevorzugt das Metallrohr, zu erwärmen und/oder das Kunststoffmaterial bei einer ausreichend hohen Temperatur in das Spritzgusswerkzeug einzuspritzen, um die Vernetzung zu bewirken. Alternativ ist es möglich, durch ein Tempern nach dem Anspritzen vollständiges Vernetzen zu erreichen.

Der Haftvermittler oder Klebstoff, der für die stoffschlüssige Anbindung zwischen Kunststoff und Blechprofil und/oder Metallrohr sorgt, ist bevorzugt ein Polyurethansystem oder ein Epoxidsystem, besonders bevorzugt ein auf Bisphenol A und/oder Bisphenol B und/oder Bisphenol C und/oder Bisphenol F basierendes Epoxidharz.

Bevorzugte Haftvermittlersysteme oder Klebstoffe für die erfindungsgemäß einzusetzenden Kunststoffmaterialien basieren auf Elastomer-modifizierten Epoxidklebstoffen, insbesondere mit kovalenter Anbindung durch Einpolymerisation von 1,3-Butadienen und/oder physikalischer Einbindung durch Zugabe von Kautschuk.

In einer alternativen, bevorzugten Ausführungsform wird das Blechprofil erst nach dem Umspritzen in einem separaten Prozessschritt durch Nieten, Heißnieten, Clinchen, Kleben oder Schrauben mit der Kunststoffstruktur des Metallrohres zusätzlich zu seinem ohnehin durch den Spritzvorgang erfolgten Verbund verbunden.

In einer bevorzugten Ausführungsform der Erfindung ist der im Querträgermodul verwendete Grundkörper, bevorzugt das Metallrohr, an beiden Enden verquetscht, wobei sich in beiden verquetschten Enden Bohrungen befinden. Die an den gequetschten Enden vorgesehenen Bohrungen dienen bei der Montage des Querträgermoduls in der Fahrzeugkarosserie als Anschraublaschen für die A-Säulen. Der Vorteil dieser Ausführung besteht darin, dass keine zusätzlichen Haltewinkel, wie sie sonst im Stand der Technik für die A-Säulenanbindung üblich sind, angeschweißt werden müssen. Es kann somit der zusätzliche Fertigungsschritt des Anschweißens einer A-Säulenanbindung entfallen, wodurch es auch zu keinen Verzugsproblemen an diesen Stellen kommt.

Weiterhin bevorzugt ist es, dass das Querträgermodul zusätzlich zum Lenkstockhalter angespritzte Kunststofflaschen an den verquetschten Enden des Grundkörpers, bevorzugt des Metallrohres, aufweist und sich in den angespritzten Kunststofflaschen jeweils eine Durchgangsbohrung befindet. Diese weitere Durchgangsbohrung dient einer weiteren Anbindung des Querträgermoduls an den A-Säulen, insbesondere um eine Rotation des Querträgermoduls um die Längsachse des Metallrohres auszuschließen.

Generell lässt sich das Material des Grundkörpers im Hinblick auf die geforderten mechanischen Eigenschaften auswählen. Weiterhin ist abhängig vom Fahrzeugtyp auch stärkeres Gewicht entweder auf eine Bauraumoptimierung oder aber Gewichtsoptimierung zu legen, wodurch ebenfalls die geeignete Wahl des Materials für den Grundkörper beeinflusst ist. Schließlich orientiert sich die Materialwahl auch aufgrund des direkten Kontaktes zwischen dem Grundkörper, bevorzugt einem Metallrohr, und der A-Säule im Kraftfahrzeug an Korrosionserfordernissen bei einer entsprechenden Materialpaarung. Der Grundkörper ist vorzugsweise nahtlos, doch kann es sich auch um ein längsnahtgeschweißtes oder auch Strang gepresstes Metallrohr handeln. Bevorzugt sind die Außenabmessungen des Grundkörpers, bevorzugt des Metallrohrs eng toleriert, damit das Spritzwerkzeug dicht mit dem Grundkörper abschließt und sich beim bereichsweisen Umspritzen des Grundkörpers und des Lenkstockhalters mit Kunststoff eine hohe Fertigungsqualität erreichen lässt. In einer bevorzugten Ausführungsform ist der Grundkörper, bevorzugt das Metallrohr, gerade ausgeführt, d.h. er bzw. es weist keine Biegungen auf, an denen bei in den Grundkörper über die verquetschten Enden eingeleiteten Druckkräften (im Falle eines Seitencrashs) Biegeverformungen auftreten könnten.

Das erfindungsgemäße Querträgermodul besitzt wenigstens eine angeformte Aufnahme oder ein Anbindungselement für Funktionselemente. Erfindungsgemäße Funktionselemente sind ein Beifahrerairbag und/oder Knieprotektoren und/oder Aufnahmen für eine Radio- und/oder Navigationseinheit um nur einige Beispiele zu benennen. Weitere Anbindungselemente werden in der Legende zu den Figuren aufgelistet und sind ebenfalls Bestandteil der vorliegenden Offenbarung. Bei allen genannten Aufnahmen bzw. Anbindungselementen, die alternativ oder in beliebiger Kombination miteinander am Querträgermodul einstückig angeformt sein können, wird die Montage diverser Cockpitkomponenten erleichtert. Eine weitere alternative oder in Kombination vorgesehene angeformte Aufnahme dient der Kardantunnelanbindung. Eine Kardantunnelanbindung besitzt den Vorteil, dass das Querträgermodul zwischen den Befestigungspunkten jeweils an den A-Säulen einen zusätzlichen Befestigungspunkt zur Fahrzeugkarosserie aufweist, wodurch zum einen die Festigkeit und Steifigkeit des Gesamtverbunds erhöht wird und zum anderen auch das Schwingungsverhalten des Querträgermoduls günstig beeinflusst wird.

Nach einer bevorzugten Ausführungsform der Erfindung umfasst das Querträgermodul weiterhin Bereiche am Grundkörper, bevorzugt dem Metallrohr, die nicht mit Kunststoff umgeben sind und zur Anbringung von Verbindungselementen dienen, über welche eine Anschraubplatte der Lenksäule befestigbar ist. Die Integration der Lenksäulenanbindung kann über Verbindungselemente erfolgen. Bevorzugte Verbindungselemente sind Rohrschellen. Auf diese Weise wird auch im Bereich der Lenksäulenanbindung auf eine Schweißverbindung mit entsprechenden Verzugsproblemen verzichtet. Um eine sichere Anbringung zu ermöglichen, erfolgt dies bevorzugt direkt am Grundkörper, bevorzugt am Metallrohr, d.h. an einer Stelle, die nicht mit Kunststoff umgeben ist.

Nach einer bevorzugten Ausführungsform der Erfindung umfasst das Querträgermodul einen Kunststoffkanal zur bevorzugten Aufnahme elektrischer Leitungen. In einer besonders bevorzugten Ausführungsform umfasst das Querträgermodule einen Kunststoffkanal mit zusätzlichen Schaumelementen, die den im Kunststoffkanal geführten Leitungssatz umgeben. Diese Schaumelemente sind in den gegebenenfalls am Grundkörper vorgesehenen Kunststoffkanal einsteckbar und so bemessen, dass sie sich im Kunststoffkanal elastisch aufweiten und gegen dessen Innenwand verklemmen. Vorzugsweise bestehen die Schaumelemente aus PE-Schaum, Moosgummi oder ähnlichen Materialien. PE-Schaum ist sehr kostengünstig, während Moosgummi in Bezug auf Elastizität und den für die Klemmung im Kunststoffkanal wichtigen Reibwert vorteilhaft ist (PE = Polyethylen). Der Vorteil der Schaumelemente besteht darin, dass verschiedene Dicken von Leitungssätzen durch die Elastizität der Schaumelemente aufgenommen werden können. Unterschiedlich dicke Leitungssätze treten insbesondere bei der Verwendung von kundenspezifischen Kabelbäumen auf. Durch die Komprimierbarkeit der Schaumelemente und deren Rückfedereigenschaften kann eine Fixierung des Leitungssatzes innerhalb des gegebenenfalls vorhandenen Kunststoffkabelkanals erfolgen. Weiterhin kann auf eine aufwändige vollständige Umwicklung des Bündels von Einzeladern mit Klebeband verzichtet werden, weil die Schaumelemente ein Klappern der Einzeladern im gegebenenfalls vorhandenen Kunststoffkanal verhindern.

Vorzugsweise sind im Kunststoffkanal weiterhin parallel zueinander angeordnete Führungsrillen angeformt, zwischen welche jeweils ein Schaumelement einschiebbar ist. Auf diese Weise lässt sich nicht nur das positionsgenaue Einschieben der Schaumelemente erleichtern, sondern auch die exakte Position der einzelnen Schaumelemente im Kunststoffkanal sicherstellen.

Nach einer bevorzugten Ausführungsform umfasst der im gegebenenfalls vorliegenden Kunststoffkanal geführte Leitungssatz Einzeladern, die im Wesentlichen nur durch Abbinder zusammengehalten sind. Abbinder werden dazu verwendet, um die Position abzweigender Leitungen zu definieren. Mit anderen Worten, es kann die vollständige Umwicklung des Bündels von Einzeladern entfallen und es sind nur noch Abbinder an denjenigen Stellen notwendig, an denen Einzeladern oder Teilstränge definiert abzweigen.

Vorzugsweise ist der Kunststoffkanal so dimensioniert, um einen Leitungssatz für das gesamte Bordnetz aufzunehmen. Der Leitungssatz umfasst dabei auch einen Motorraumleitungssatz, der vorzugsweise von einer Platte oder Tülle umgeben ist, deren Abmessungen auf die Größe einer Öffnung in der Stirnwand des Fahrzeugs abgestimmt ist. Es lässt sich somit mit der Montage des Querträgermoduls ein Leitungssatz im Kunststoffkanal mitmontieren, der bereits den Motorraumleitungssatz umfasst und der durch eine entsprechende Öffnung in der Stirnwand in den Motorraum geführt wird. Um die entsprechende Öffnung in der Stirnwand wieder dicht verschließen zu können, ist hierzu bereits die entsprechende Platte oder Tülle vorgesehen.

Die für das Blechprofil des Lenkstockhalters oder die für den Grundkörper, bevorzugt einem Metallrohr, zu verwendenden Materialien sind insbesondere bevorzugt Stahl, Aluminium, Aluminiumlegierungen, Stahllegierungen, Magnesium, Titan oder Glas- oder Kohlefaserverstärkte Kunststoffe. In einer alternativen Ausführungsform der vorliegenden Erfindung können Blechprofile aus unterschiedlichen Materialien der oben genannten Reihe miteinander kombiniert werden. Insbesondere bevorzugt wird für ein zu verwendendes Metallrohr Stahl eingesetzt. In einer alternativen Ausführungsform kann der Grundkörper aber auch aus einem hochfesten Kunststoffmaterial, insbesondere aus Organoblech bestehen. Die Verwendung von Organoblech in Strukturbauteilen wird beispielsweise in DE 20 2006 019 341 A1 offenbart. Ihre Herstellung wird beispielsweise in DE 10 2006 013 685 A1 oder in DE 10 2004 060 009 A1 beschrieben.

Zur Erzielung der Rippenstruktur der Rohrummantelung und der Verbindung von Querträgermodul und Lenkstockhalter sowie der Erzielung von Anbindungselementen werden thermoplastische Polymere, bevorzugt in Form von Polymer-Formmassen eingesetzt.

Erfindungsgemäß werden wenigstens zwei verschiedene Kunststoffe gleichzeitig durch Spritzguss sowohl mit dem Grundkörper als auch miteinander nach dem Bi-Injektionsverfahren fest verbunden. Dem Fachmann ist das Bi-Injektionsverfahren bekannt. Beispielhaft für den Einsatz des Bi-Injektionsverfahrens im Automobilbau sei auf die WO 02/064343 A1 verwiesen.

In den weiteren Ausführungen wird der Anschaulichkeit halber von zwei thermoplastischen Kunststoffen ausgegangen, was nicht ausschließt, dass die vorliegende Erfindung die Kombination durchaus mehrerer Kunststoffe miteinander umfasst.

Bevorzugt betrifft die vorliegende Erfindung ein Kraftfahrzeug-Querträgermodul, bei dem die Verschmelzung der beiden Kunststoffe während des Bi-Injektionsverfahrens innerhalb derselben Kavität, wo sie aufeinander treffen, erfolgt.

Als zu verspritzende Kunststoffe werden bevorzugt themoplastische Polymere, besonders bevorzugt thermoplastische Polymere aus der Reihe Polyamid, Polyester, Polypropylen oder mögliche Mischungen der genannten Polymere ausgewählt.

Mehrere Kunststoffe oder unterschiedliche Kunststoffe im Sinne der vorliegenden Erfindung bedeuten wenigstens zwei verschiedene Kunststoffe, wobei als verschiedene Kunststoffe Polymere der oben genannten Reihe aber auch Kunststoffe auf Basis desselben Polymers jedoch mit unterschiedlichem Füllstoffanteil und/oder Verstärkungsstoffanteil zu verstehen sind.

Verfahren zur Herstellung der erfindungsgemäß einzusetzenden thermoplastischen Kunststoffe sind dem Fachmann bekannt. Die zu erzielenden Effekte zeigen sich ebenso bei allen aus dem oben zitierten Stand der Technik bekannten Variationen des Einsatzes der Hybridtechnologie, sei es dass der Kunststoffteil das Metallteil vollständig umhüllt, oder wie im Fall der EP 1 380 493 A2 nur umgurtet, sei es dass das Kunststoffteil nachträglich eingeklebt oder mit beispielsweise einem Laser mit dem Metallteil verbunden wird oder Kunststoffteil und Metallteil wie in WO 2004/071741 A1 in einem zusätzlichen Arbeitsschritt den festen Formschluss erhalten.

In einer Ausführungsvariante betrifft die vorliegende Erfindung deshalb auch Kraftfahrzeug-Querträgermodule der oben beschriebenen Art, wobei das Kunststoffmaterial des ersten Kunststoffteiles sich vom Kunststoff des zweiten Kunststoffteiles durch den Anteil an Füllstoffen und/oder Verstärkungsstoffen unterscheidet. Erfindungsgemäß kann aber jedes der oben genannten Polymere mit Füll- und/oder Verstärkungsstoffen versehen werden.

In jedem Fall ist die Menge an Füllstoff bei Einsatz desselben Polymers in den zu verwendenden Kunststoffen verschieden. Sie kann aber bei Einsatz verschiedener Polymere in den beiden Kunststoffen durchaus zu gleichen Anteilen vorliegen.

Im Falle, dass in beiden Kunststoffen derselbe thermoplastische Kunststoff eingesetzt wird, beträgt der Unterschied im Füllstoffgehalt beider thermoplastischer Kunststoffe 0:70 bis 70:0, bevorzugt 30:65 bis 65:30, besonders bevorzugt 15:60 bis 60:15 Gew.-Teile.

Erfindungsgemäß bevorzugt einzusetzende Polyamide sind teilkristalline Polyamide (PA), die ausgehend von Diaminen und Dicarbonsäuren und/oder Lactamen mit wenigstens 5 Ringgliedern oder entsprechenden Aminosäuren hergestellt werden können. Als Edukte kommen dafür aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiarnin, die isomeren Diamino-dicyclo-hexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Erfindungsgemäß bevorzugte Polyamide werden aus Caprolactamen, ganz besonders bevorzugt aus ε -Caprolactam sowie die meisten auf PA6, PA66 und auf anderen aliphatischen und/oder aromatischen Polyamiden bzw. Copolyamiden basierenden Compounds, bei denen auf eine Polyamidgruppe in der Polymerkette 3 bis 11 Methylengruppen kommen, hergestellt.

Erfindungsgemäß einzusetzende teilkristalline Polyamide können auch im Gemisch mit anderen Polyamiden und/oder weiteren Polymeren eingesetzt werden.

Den Polyamiden können übliche Additive, bevorzugt Entformungsmittel, Stabilisatoren und/oder Fließhilfsmittel, in der Schmelze zugemischt oder auf der Oberfläche aufgebracht werden.

Erfindungsgemäß ebenfalls bevorzugt einzusetzende Polyester sind Polyester auf Basis von aromatischen Dicarbonsäuren und einer aliphatischen oder aromatischen Dihydroxyverbindung.

Eine erste Gruppe bevorzugter Polyester sind Polyalkylenterephthalate, insbesondere solche mit 2 bis 10 C-Atomen im Alkoholteil.

Derartige Polyalkylenterephthalate sind in der Literatur beschrieben. Sie enthalten einen aromatischen Ring in der Hauptkette, der von der aromatischen Dicarbonsäure stammt. Der aromatische Ring kann auch substituiert sein, bevorzugt durch Halogen, insbesondere Chlor und Brom, oder durch C₁-C₄-Alkylgruppen, insbesondere Methyl, Ethyl-, i- bzw. n-Propyl- und n-, i- bzw. t-Butylgruppen.

Diese Polyalkylenterephthalate können durch Umsetzung von aromatischen Dicarbonsäuren, deren Ester oder anderen esterbildenden Derivaten mit aliphatischen Dihydroxyverbindungen in bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbon-Säuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butadiol, 1,6-Hexandiol, 1,4-hexandiol, 1,4-Cyclohexandiol, 1,4-Cyclohexandimethanol und Neopentylglykol oder deren Mischungen bevorzugt.

Als insbesondere besonders bevorzugt einzusetzende Polyester sind Polyalkylenterephthalate, die sich von Alkandiolen mit 2 bis 6 C-Atomen ableiten, zu nennen. Von diesen werden insbesondere Polyethylenterephthalat (PET), Polypropylenterephthalat und Polybutylenterephthalat (PBT) oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-pentandiol als weitere Monomereinheiten enthalten.

Die Viskositätszahl der erfindungsgemäß bevorzugt einzusetzenden Polyester liegt im Allgemeinen im Bereich von 50 bis 220, vorzugsweise von 8 bis 160 (gemessen in einer 0,5 gew.-%igen Lösung in einem Phenol/o-Dichlorbenzolgemisch (Gew.-Verh. 1: 1 bei 25°C) gemäß ISO 1628.

Insbesondere bevorzugt sind Polyester, deren Carboxyl-Endgruppengehalt bis zu 100 mval/kg, bevorzugt bis zu 50 mval/kg und insbesondere bevorzugt bis zu 40 mval/kg Polyester beträgt. Derartige Polyester können beispielsweise nach dem Verfahren der DE-A 44 01 055 hergestellt werden. Der Carboxyl-Endgruppengehalt wird üblicherweise durch Titrationsverfahren (z.B. Potentiometrie) bestimmt.

Im Falle des Einsatzes von Polyestermischungen enthalten die Formmassen eine Mischung aus Polyestern, also zusätzlich Polyester die verschieden von PBT sind, wie beispielsweise Polyethylenterephthalat (PET).

Weiterhin ist es vorteilhaft Rezyklate wie beispielsweise PA-Rezyklate oder PET-Rezyklate (auch scrap-PET genannt) gegebenenfalls in Mischung mit Polyalkylenterephthalaten wie PBT einzusetzen.

Unter Rezyklaten versteht man im Allgemeinen:
1) sogenannte Post Industrial Rezyklate: hierbei handelt es sich um Produktionsabfalle bei der Polykondensation oder bei der Verarbeitung anfallende Angüsse bei der Spritzgussverarbeitung, Anfahrware bei der Spritzgussverarbeitung oder Extrusion oder Randabschnitte von extrudierten Platten oder Folien.
2) Post Consumer Rezyklate: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Rezyklat-Arten können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise < 0,2 %, insbesondere < 0,05 %.

Als weitere Gruppe bevorzugt einzusetzender Polyester sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel (I) 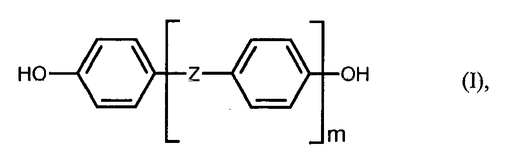 in der
- Z eine: Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der
- m: den Wert 0 bis 2 hat.

Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seien beispielsweise Dihydroxydiphenyl, Di-(hydroxyphenyl)alkan, Di-(hydroxyphenyl)cycloalkan, Di-(hydroxyphenyl)sulfid, Di-(hydroxyphenyl)ether, Di-(hydroxyphenyl)keton, Di-(hydroxyphenyl)sulfoxid, α,α'-Di-(hydroxyphenyl)-dialkylbenzol, Di-(hydroxyphenyl)sulfon, Di-(hydroxybenzol)benzol, Resorcin und Hydrochinon sowie deren kernalkylierte oder kernhalogenierte Derivate genannt.

Von diesen werden 4,4'-Dihydroxydiphenyl, 2,4-Di-(4'-hydroxyphenyl)-2-methylbutan, α ,α'-Di-(4-hydroxyphenyl)-p-diisopropylbenzol, 2,2-Di-(3'-methyl-4'-hydroxyphenyl)propan und 2,2-Di-(3'-chlor-4'-hydroxyphenyl)propan, sowie insbesondere 2,2-Di-(4'-hydroxyphenyl)propan, 2,2-Diphenon, 4,4'-Dihydroxydiphenylsulfon und 2,2-Di(3',5'-dimethyl4'-hydroxyphenyl)propan oder deren Mischungen bevorzugt.

Selbstverständlich kann man auch Mischungen von Polyalkylenterephthalaten und vollaromatischen Polyestern einsetzten. Diese enthalten im Allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind bekannt und in der Literatur, z.B. in der US-A 3 651 014, beschrieben. Auch im Handel sind entsprechende Produkte erhältlich, z.B. Hytrel^{®} (DuPont).

Als Polyester bevorzugt einzusetzende Materialien sollen erfindungsgemäß auch halogenfreie Polycarbonate verstanden werden. Geeignete halogenfreie Polcarbonate sind beispielsweise solche auf Basis von Diphenolen der allgemeinen Formel (II) 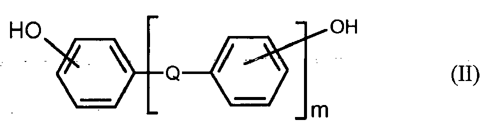 worin
- Q: eine Einfachbindung, eine C₁- bis C₈-Aklen-, eine C₁- bis C₃-Alkyliden-, eine C₃- bis C₆-Cycloalkylidengruppe, eine C₆- bis C₁₂-Arylengruppe sowie -0-, -S- oder -SO₂- bedeutet und m eine ganze Zahl von 0 bis 2 ist.

Die Diphenole können an den Phenylenresten auch Substituenten wie C₁- bis C₆-Alkyl oder C₁- bis C₆-Alkoxy haben.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1 -Bis-(4-hydroxyphenyl)-3,3,5-trimethylcyclohexan.

Sowohl Homopolycarbonate als auch Copolycarbonate sind geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, insbesondere solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000 g/mol.

Die Diphenole der allgemeinen Formel sind bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-Di-t-Butylphenol, p-t-Octylphenol, p-Dodecylphenol, 2-(3,5-Dimethylheptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halgoenfreie Polycarbonate im Sinne der vorliegenden Erfindung.

Als weitere thermoplastische Polymere seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 0 711 810 verwiesen.

Weitere geeignete Copolycarbonate mit Cycloalkylresten als Monomereinheiten sind in der EP-A 0 365 916 beschrieben.

Weiterhin kann Bisphenol A durch Bisphenol TMC ersetzt werden. Derartige Polycarbonate sind unter dem Warenzeichen APEC HT^{®} der Firma Bayer AG erhältlich.

Schließlich sei noch Polypropylen als bevorzugt einzusetzendes Polymer zu nennen.

In einer weiteren bevorzugten Ausführungsform der vorliegenden Erfindung enthält wenigstens eine der zu verwendenden Polymere bzw. Polymer-Formmassen 0,001 bis 75 Gew.-Teile, vorzugsweise 10 bis 70 Gew.-Teile, besonders bevorzugt 20 bis 65 Gew.-Teile insbesondere bevorzugt 30-65 Gew.-Teile eines Füll- oder Verstärkungsstoffes.

Als Füllstoff oder Verstärkungsstoff können auch Mischungen aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern, insbesondere besonders bevorzugt Glasfasern, eingesetzt.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Der Füllstoff und/oder Verstärkungsstoff kann gegebenenfalls oberflächenmodifiziert sein, beispielsweise mit einem Haftvermittler bzw. Haftvermittlersystem insbesondere auf Silanbasis. Diese Vorbehandlung ist jedoch nicht unbedingt erforderlich. Insbesondere bei Verwendung von Glasfasern können aber zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind Silanverbindungen, bevorzugt Silanverbindungen der allgemeine Formel (III)

(X-(CH₂)_{q})ₖ-Si-(O-CᵣH₂ᵣ₊₁)₄₋ₖ (III)

worin
- X: für NH₂-, HO- oder 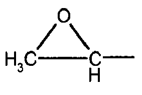 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

>

Ferner bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. zum Formkörper in der Formmasse bzw. im Formkörper einen kleineren d97- bzw. d50-Wert aufweisen, als die ursprünglich eingesetzten Füllstoffe. Die Glasfasern können, bedingt durch die Verarbeitung zur Formmasse bzw. zum Formkörper, in der Formmasse bzw. im Formkörper kürzere Längenverteilungen als ursprünglich eingesetzt aufweisen.

Im Falle des Einsatzes verschiedener Kunststoffe können diese die Füllstoffe zu jeweils 0,001 bis 70 Gew.-Teilen, vorzugsweise 30 bis 60 Gew.-Teilen, besonders bevorzugt 15 bis 65 Gew.-Teilen, insbesondere bevorzugt 15-60 Gew.-Teilen einzeln oder im Gemisch mit anderen Füllstoffen/Verstärkungsstoffen enthalten.

In jedem Fall ist die Menge an Füllstoff bei Einsatz desselben Polymers in den zu verwendenden Kunststoffen verschieden. Sie kann aber bei Einsatz verschiedener Polymere in den beiden Kunststoffen durchaus zu gleichen Anteilen vorliegen.

Im Falle, dass in beiden Kunststoffen derselbe thermoplastische Kunststoff eingesetzt wird, beträgt der Unterschied im Füllstoffgehalt beider thermoplastischer Kunststoffe 0:70 bis 70:0, bevorzugt 30:65 bis 65:30, besonders bevorzugt 15:60 bis 60:15 Gew.-Teile.

Im Falle des Einsatzes verschiedener thermoplastischer Polymere als Kunststoff werden bevorzugt Kombinationen der Reihe PA-PBT oder PA-PP eingesetzt, worin PA für Polyamid, PBT für Polybutylenterephthalat und PP für Polypropylen stehen.

In einer bevorzugten Ausführungsform können die zu verwendenden thermoplastischen Polymere wenigstens einen Compatibilizer enthalten, eine Materialkomponente, die es über einen physikalischen Vorgang gestattet, kritische Materialien wie beispielsweise Polypropylen zum Polyamid bzw. auch umgekehrt zu verbinden. Zu verwendende Compatibilizer werden beispielsweise in DE 4 206 191 A1 oder US 6 541 571 B1 beschrieben.

In einem weiteren Aspekt betrifft die Erfindung ein Verfahren zur Herstellung eines Kraftfahrzeug-Querträgermoduls zur Aufnahme der Instrumententafel eines Kraftfahrzeugs in Kunststoff-Metall-Hybridbauweise umfassend wenigstens einen Grundkörper aus Metall oder aus einem hochfesten Kunststoffmaterial, bevorzugt in Rohrform, der bereichsweise mit Kunststoff umgeben ist und ein als Lenkstockhalter fungierendes einfach geformtes Blechprofil das so konstruiert und platziert wird, dass es im Verbund mit wenigstens einem anzuspritzenden Kunststoff eine steife Verbindung einerseits zwischen Lenkstock und Stirnwand ergibt und andererseits mit dem Grundkörper bzw. über eine reine Kunststoffstruktur mit dem Grundkörper fest verbunden ist, dadurch gekennzeichnet, dass das Querträgermodul durch ein Spritzgussverfahren nach dem Bi-Injektionsverfahren hergestellt wird, wodurch über den Einsatz wenigstens zweier verschiedener Kunststoffe zudem Anbindungselemente für Funktionselemente angespritzt werden und die verschiedenen Kunststoffmaterialien den verschiedenen Kunststoffteilchen einen festen Verbund miteinander ermöglichen, indem die verschiedenen Kunststoffmaterialien beim Aufeinandertreffen im Bi-Injektionsverfahren miteinander verschmelzen.

Nach einer Ausführungsform der Erfindung geht wenigstens einer der Kunststoffe der Kunststoffteile mit dem Grundkörper eine formschlüssige Verbindung ein.

Nach einer Ausführungsform der Erfindung geht wenigstens einer der Kunststoffe der Kunststoffteile mit einer Kante des Grundkörpers, die eine Verschiebung dieses Kunststoffteiles auf dem Grundkörper in mindestens einer Richtung vorzugsweise in Längsrichtung des Kunststoffteils ermöglicht, die formschlüssige Verbindung ein.

Nach einer Ausführungsform der Erfindung erfolgt die Verschmelzung der beiden verschiedenen Kunststoffe innerhalb derselben Kavität(en) wo sie aufeinander treffen.

Nach einer Ausführungsform der Erfindung besteht der Grundkörper aus Metall oder einem hochfesten Kunststoffmaterial.

Nach einer Ausführungsform der Erfindung werden als Metall für den Grundkörper Stahl, Aluminium oder Magnesium oder Legierungen dieser Metalle mit anderen Metallen verwendet. Nach einer Ausführungsform der Erfindung wird als Kunststoff wenigstens ein Kunststoff aus der Reihe Polyamid, Polyester, Polypropylen oder mögliche Mischungen der genannten Polymere ausgewählt.

Nach einer Ausführungsform der Erfindung unterscheiden sich die zu verarbeitenden Kunststoffmaterialien durch den Anteil an Füllstoffen und/oder Verstärkungsstoffen.

Nach einer Ausführungsform der Erfindung wird ein mehrteiliger Grundkörper verwendet, wobei durch das Spritzgießen die einzelnen Teile des Grundkörpers über eines der thermoplastischen Kunststoffteile miteinander verbunden werden.

In einem weiteren Aspekt betrifft die Erfindung ein Kraftfahrzeug-Querträgermodul, hergestellt nach einem Verfahren wie obig beschrieben.

Zur Klarstellung sei angemerkt, dass vom Rahmen der Erfindung alle vorstehend aufgeführten, allgemeinen oder in Vorzugsbereichen genannten Definitionen und Parameter in beliebigen Kombinationen umfasst sind.

Die Erfindung wird nachfolgend anhand der Figuren durch die Beispiele, welche jedoch keine Beschränkung der Erfindung darstellen, näher erläutert.

### Ausführungsbeispiel

### Kurze Beschreibung der Zeichnungen

Nachfolgend wird die Erfindung rein beispielhaft anhand der beigefügten Figuren beschrieben:

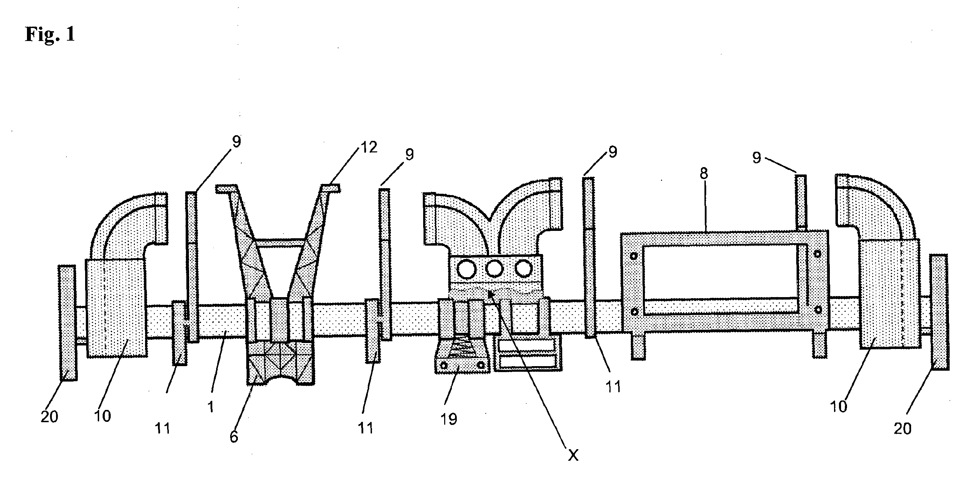

**Fig. 1** zeigt ein Querträgermodul, in Fahrzeugeinbaulage von hinten. Die im Bi-Injektions Verfahren angespritzten Kunststoffkomponenten A und B und die 3 Blechprofile 3, 4, 5 sind unterschiedlich gepunktet dargestellt. Im markierten Bereich (gepunktete Linie) treffen die Schmelzefronten aufeinander. Mit X sind die Stellen markiert, wo Kunststoff-Komponente A und Kunststoff-Komponente B aufeinander treffen

| | |
|---|---|
| Kunststoff Komponente A | 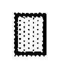 |
| Kunststoff Komponente B | 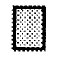 |
| Blechprofil 3 / Blechprofil 4 / Blechprofil 5 | 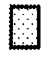 |
| 1 = Grundkörper | |
| 4,5 = Anbindungselemente | |

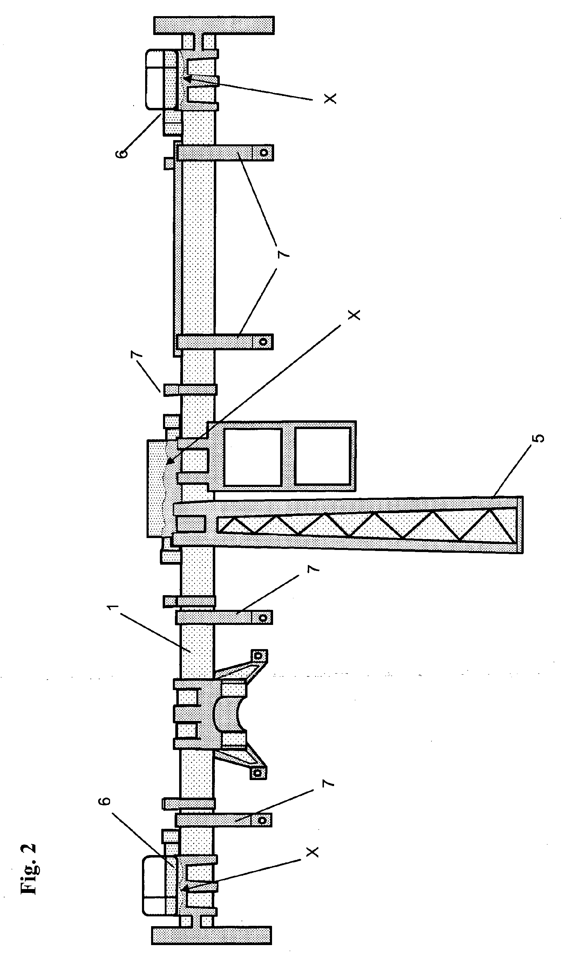

**Fig. 2** zeigt ein Querträgermodul, in Fahrzeugeinbaulage von oben. Die im Bi-Injektions Verfahren angespritzten Kunststoffkomponenten A und B und die 3 Blechprofile 3, 4, 5 sind unterschiedlich gepunktet dargestellt. Im markierten Bereich (gepunktete Linie) treffen die Schmelzefronten aufeinander. X zeigt auf die Stelle, wo Kunststoff-Komponente A und Kunststoff Komponente B aufeinander treffen.

| | |
|---|---|
| Kunststoff Komponente A | 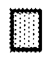 |
| Kunststoff Komponente B | 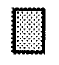 |
| Blechprofil 3 / Blechprofil 4 / Blechprofil 5 | 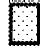 |

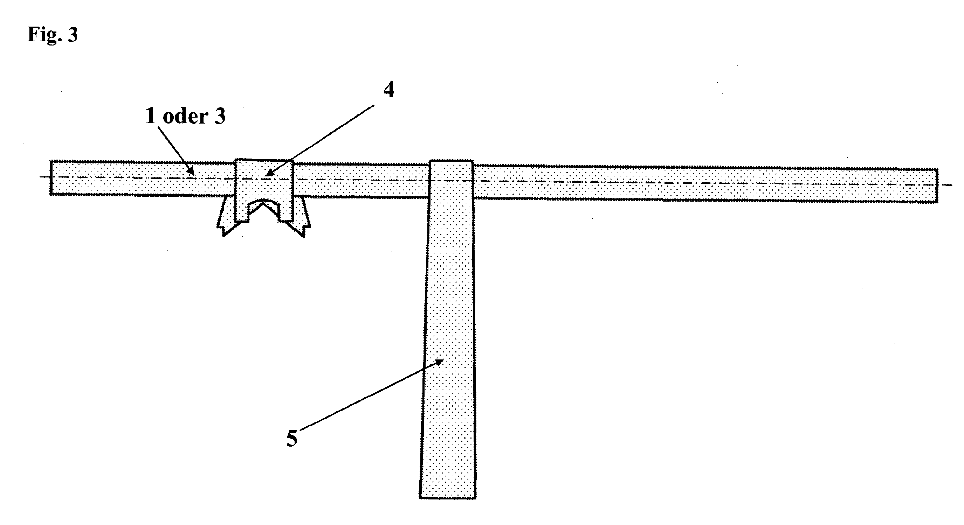

**Fig. 3** zeigt von hinten die 3 Blecheinleger des Querträgermoduls gemäß Fig. 1 und Fig. 2 vor dem Umspritzen mit Kunststoff. Nicht dargestellt sind die Durchbrüche in den Blechprofilen (Fig 3) sowie deren Um- und Durchspritzungen und Kantenumspritzungen mit Kunststoff (Fig 1 und Fig 2). Die einzelnen Blecheinleger sind mit den Ziffern 3, 4 und 5 beziffert.

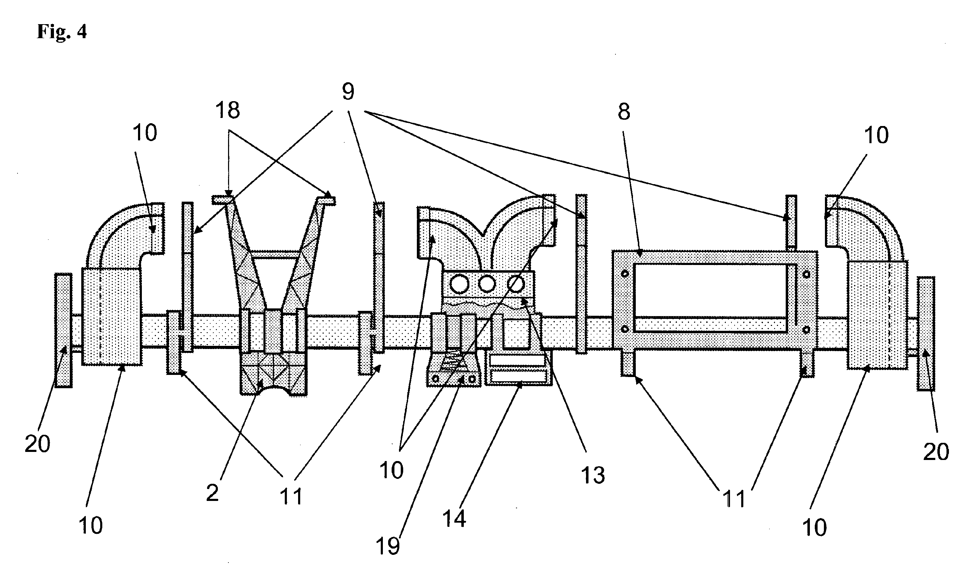

**Fig. 4** zeigt ein Querträgermodul in Fahrzeugeinbaulage von oben. Folgende Funktionen bzw. Anbindungselemente für Funktionselemente sind dargestellt und gekennzeichnet
- 2: Lenkstockhalter
- 6,7: Anbindungselemente (allgemein)
- 8: Halter Airbag Gehäuse
- 9: Halter Luftkanal
- 10: Anschluss Lüftungsdüsen/Luftauslass/Luftkanäle
- 11: Halter Knieabsorber
- 12: (Halter Handschuhfach = nicht dargestellt)
- 13: Halter Klimagerät
- 14: Halter Multimedia Geräte (Navigationsgerät, Radio, Telefon ...)
- 15: (Halter Sicherungskasten = nicht dargestellt)
- 16: (Halter Cockpit Instrumente = nicht dargestellt)
- 17: (Befestigung/Verbindung zur Instrumententafel =-nicht dargestellt)
- 18: Befestigung/Verbindung zur Spritzwand
- 19: Befestigung/Verbindung zur Mittelkonsole/Tunnelstrebe
- 20: Befestigung/Anbindung zu den A-Säulen
- 21: (Befestigung Kabelbaum = nicht dargestellt)

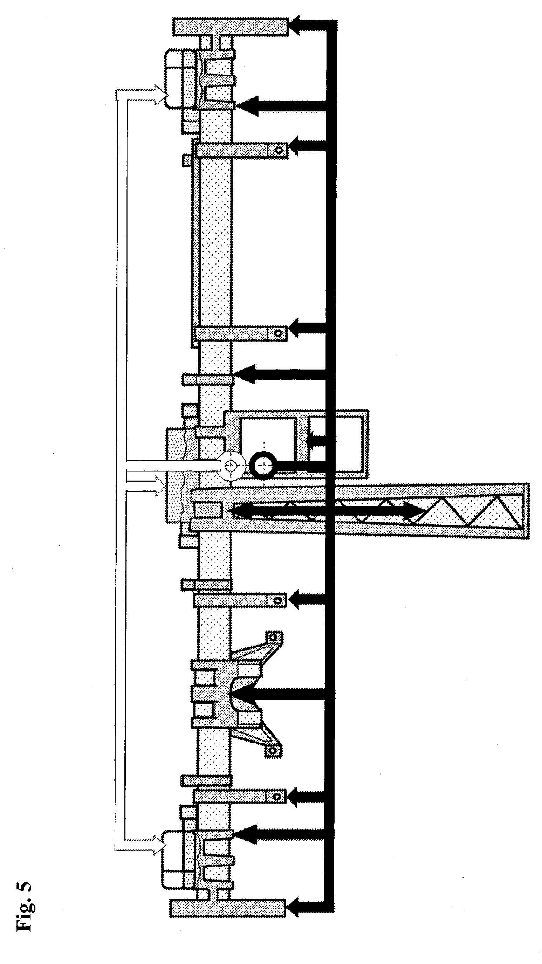

**Fig. 5** zeigt ein Querträgermodul mit schematisch dargestelltem Angusssystem für das Spritzgießwerkzeug. Die Kunststoffkomponenten A und B gelangen durch separate Fließkanäle von den Plastifiziereinheiten (für Komponente A und Komponente B) bis in die Kavität des Spritzgießwerkzeuges. Die in das Spritzgießwerkzeug eingelegten Blechprofile 3, 4 und 5 (Fig. 3) werden von den Kunststoffkomponenten A und B in der vorbestimmten Geometrie umspritzt.

Das allgemein als Grundkörper bezeichnete Metallrohr 1 des Querträgermoduls ist in Fig. 3 ohne spezielle Formgebung und Formgestaltung des Metallrohrs sowie evtl. einzelner Anbindungselemente dargestellt. Es sollte aber deutlich sein, dass die spezielle Geometrie nur beispielhaft zu verstehen ist, sofern sich dies nicht aus der nachfolgenden Erläuterung ergibt.

Das dargestellte erfindungsgemäße Querträgermodul (Fig. 1) bestehend aus Lenkstockhalter 12, Grundkörper/Metallrohr 1 und Tunnelstrebe dient der Aufnahme der Instrumententafel eines Fahrzeuges und wird bei der Montage an die A-Säulen, an die Spritzwand und an den Kardantunnel eines Kraftfahrzeuges angebunden. Das Querträgermodul umfasst ein nahtloses oder längsnahtgeschweißtes Metallrohr 1, vorzugsweise Stahlrohr, dessen Außenabmessungen eng toleriert sind. Das Metallrohr ist bevorzugt an seinen beiden Enden verquetscht. An diesen gequetschten Enden befinden sich Bohrungen, die als Anschraublaschen für die A-Säulen dienen. Die Bohrungen befinden sich somit im Bereich des Metallrohres, wodurch der Querträger eine starre Verbindung zwischen den A-Säulen herstellt. Um insbesondere auch hohe auftretende Kräfte im Falle eines Seitencrashs aufnehmen zu können, ist zudem das Metallrohr 1 bevorzugt gerade ausgeführt, d.h. das Metallrohr 1 weist keine Biegungen auf, an denen bei in das Metallrohr 1 über die verquetschten Enden eingeleiteten Druckkräften Biegeverformungen auftreten können.

Bei der Herstellung des Querträgers wird das Metallrohr 1 in einer Spritzgussanlage mit Kunststoff A und/oder B umspritzt. Hierbei wird bevorzugt faserverstärkter Kunststoff, bevorzugt glasfasergefüllter Kunststoff eingesetzt. Als besonders geeignet hat sich hierbei das Material Durethan^{®} PA GF60 (Polyamid mit 60 Gew.-% Glasfasergehalt der Lanxess Deutschland GmbH) erwiesen. Das Metallrohr 1 kann vollständig mit Kunststoff umspritzt sein, aber auch, bereichsweise nicht mit Kunststoff umspritzt sein. Soll das Metallrohr 1 nicht vollständig umspritzt werden, sind besondere Anforderungen an die Maßhaltigkeit der Werkzeuge sowie des Metallrohres 1 in der Spritzgussanlage gestellt, weshalb das Metallrohr 1 in Bezug auf die Außenabmessungen eng toleriert sein sollte.

Der Vorteil des Umspritzens des Metallrohres 1 mit Kunststoff A und/oder B besteht darin, dass an Stellen, an denen eine hohe Festigkeit und Steifigkeit gefordert ist, diese durch das Metallrohr realisiert werden kann, während an Stellen, die lediglich zur Anbindung von später einzubauenden Bauteilen dienen, diese aus Kunststoff angeformt werden können. In gleicher Weise ist es auch möglich, innerhalb des verwendeten Kunststoffs eine weitere Differenzierung zu treffen. So könnte ein faserverstärkter und insbesondere glasfasergefüllter Kunststoff nur an denjenigen Stellen eingesetzt werden, an denen wiederum erhöhte mechanische Erfordernisse an den Kunststoff gestellt werden, während in anderen Bereichen Kunststoff mit geringer Faserverstärkung oder herkömmlicher Kunststoff ohne Faserverstärkung verwendet werden kann. Bei dem in Fig. 1 dargestellten Querträgermodul können sämtliche Kunststoffteile in einem einzigen Fertigungsschritt angespritzt werden.

Alternative Ausführungsformen sowie weitere Elemente aber auch Herstellungsmethoden für das Metallrohr des Querträgers werden in DE 10 2005 004 605 A1 offenbart.

Die in der vorliegenden Erfindung dargelegte Kunststoff-Metall-Verbundlösung für das Querträgermodul als Metallrohr und Lenkstockhalter ermöglicht es gegenüber reinen Kunststoff-Lösungen erste Eigenfrequenzen > 36 Hz im Einbauzustand zu erreichen, die sonst nur mit metallischen Ausführungen und somit deutlich schwereren Konstruktionen zu erzielen sind.

Der Aufbau der Struktur des Querträgermoduls aus Metallrohr 1 und Lenkstockhalter 2 beides in Hybridtechnik, bevorzugt mit Kunststoffverrippung wird so ausgelegt, dass zudem ein einfacher, solider Herstellungsprozess garantiert ist.

In eigenen Versuchen an Bauteilen wurde festgestellt, dass mit Polyamid beim Bi-Injektionsverfahren (= gleichzeitiges Einspritzen ohne dass eine Schmelzefront erstarrt bevor sie auf die zweite Schmelzefront trifft) die Festigkeit der Zusammenfließzone in der Höhe der Bindenahtfestigkeit eines konventionellen Ein-Kunststoff-Komponenten-Bauteiles liegt, bzw. bei optimierten Prozessparametern sogar darüber lag!

Im oben zitierten Stand der Technik werden Entgegenhaltungen angeführt die ein Mehrkomponentenverfahren beschreiben bei dem die Kunststoffkomponenten nacheinander eingespritzt werden.
- Das hat zumindest beim PA (Polyamid) und beim PBT (Polybutylenterephthalat) zur Folge, dass die Festigkeit in der Zusammenfließzone stark abfällt, beim Durethan^{®} BKV30, der Lanxess Deutschland GmbH, auf 60 % der nominellen Bindenahtfestigkeit! Beim gleichzeitigen Einspritzen und dem Aufeinandertreffen zweier Schmelzefronten wurden 100 % (und mehr bei optimierten Verfahrensparametern) erreicht, was letztendlich der entscheidende Punkt für die Leistungsfähigkeit des Bauteiles ist!
- Über 100 % können erreicht werden. Beim Aufeinandertreffen der Schmelzen dringt diejenige Schmelzefront in die andere ein, die zu diesem Zeitpunkt eine höhere Viskosität hat. Die Schmelzefronten durchmischten sich zwar nicht, aber die Kontaktfläche wurde stark erhöht und es findet ein Verklammern der eingedrungenen Schmelzezunge durch die außen liegende andere Kunststoffkomponente statt. Dieser Effekt konnte auch durch ein verzögertes Umschalten auf Nachdruck in der eindringenden Kunststoffkomponente verstärkt werden.

Gleichzeitig vereinfachte sich der Werkzeugaufbau weil keine Schieber oder Riegel vorgesehen werden mussten um die Kavität für die zweite Kunststoffkomponente freizugeben. Die Zykluszeiten wurden kürzer, weil man nicht darauf warten musste bis die erste Schmelzefront soweit erstarrt war, dass man den Schieber ziehen konnte um die Anbindung zur zweiten Kunststoffkomponente freizugeben.

## Patentansprüche

1. Kraftfahrzeug-Querträgermodul zur Aufnahme der Instrumententafel eines Kraftfahrzeugs in Kunststoff-Metall-Hybridbauweise umfassend wenigstens einen Grundkörper (1) aus Metall oder aus einem hochfesten Kunststoffmaterial, bevorzugt in Rohrform, der bereichsweise mit Kunststoff (A, B) umgeben ist und ein als Lenkstockhalter (2) fungierendes einfach geformtes Blechprofil (3) das so konstruiert und platziert wird, dass es im Verbund mit wenigstens einem anzuspritzenden Kunststoff (A) oder (B) eine steife Verbindung einerseits zwischen Lenkstock und Stirnwand ergibt und andererseits mit dem Grundkörper (1) bzw. über eine reine Kunststoffstruktur mit dem Grundkörper (1) fest verbunden ist **dadurch gekennzeichnet, dass** über den Einsatz wenigstens zweier verschiedener Kunststoffe (A, B) zudem Anbindungselemente (6, 7) für Funktionselemente gleichzeitig angespritzt werden und die verschiedenen Kunststoffinaterialien (A, B) den verschiedenen Kunststoffteilen (4, 5) einen festen Verbund miteinander ermöglichen indem die Schmelzefronten der verschiedenen Kunststoffmaterialien (A, B) beim Aufeinandertreffen im Bi-Injektionsverfahren miteinander verschmelzen.

2. Kraftfahrzeug-Querträgermodul gemäß Anspruch 1, **dadurch gekennzeichnet, dass** die Kunststoffstruktur Verstärkungsrippen aufweist.

3. Kraftfahrzeug-Querträgermodul gemäß Anspruch 2, **dadurch gekennzeichnet, dass** die Verstärkungsrippen an diskreten Verbindungsstellen über Durchbrüche im Blechprofil (3, 4, 5), durch welche der Kunststoff hindurch und über die Flächen der Durchbrüche hinausreicht, mit diesem fest verbunden sind.

4. Kraftfahrzeug-Quernägermodul gemäß der Ansprüche 1 bis 3, **dadurch gekennzeichnet, dass** als Kunststoff thermoplastische Polymere eingesetzt werden.

5. Kraftfahrzeug-Querträgermodul gemäß Anspruch 4, **dadurch gekennzeichnet, dass** thermoplastische Polymere aus der Reihe der Polyamide, Polyester oder Polypropylen oder mögliche Mischungen der genannten Polymere eingesetzt werden.

6. Kraftfahrzeug-Querträgennodul gemäß der Ansprüche 4 oder 5, **dadurch gekennzeichnet, dass** wenigstens eines der thermoplastischen Polymere 0,001 bis 75 Gew.-Teile eines Füll-oder Verstärkungsstoffes enthält.

7. Kraftfahrzeug-Querträgermodul nach einem der Ansprüche 1 bis 6, **dadurch gekennzeichnet, dass** das Blechprofil (4, 5) und/oder der Grundkörper (1)mit Haftvermittler oder Klebstoff beschichtet ist.

8. Kraftfahrzeug-Querträgermodul nach einem der Ansprüche 1 bis 7, **dadurch gekennzeichnet, dass** das Blechprofil (4, 5) erst nach dem Umspritzen in einem separaten Prozessschritt durch Nieten, Heißnieten, Clinchen, Kleben oder Schrauben mit der Kunststoffstruktur zusätzlich zu seinem ohnehin durch den Spritzvorgang erfolgten Verbund verbunden wird.

9. Verfahren zur Beeinflussung des Eigenschwingverhaltens des Instrumententafelträgers von Kraftfahrzeugen auf eine erste Eigenfrequenz > 36 Hz im Einbauzustand, **dadurch gekennzeichnet, dass** man ein Querträgermodul zur Anbringung unter der Instrumententafel eines Kraftfahrzeugs aus wenigstens einem Grundkörper (1) aus Metall oder einem hochfesten Kunststoffmaterial, bevorzugt in Rohrform, der bereichsweise mit Kunststoff (A, B) umgeben ist und ein als Lenkstockhalter (2) fungierendes einfach geformtes Blechprofil so konstruiert und platziert, dass im Verbund mit wenigstens einem anzuspritzenden Kunststoff (A oder B) eine steife Verbindung einerseits zwischen Lenkstock und Stirnwand resultiert und andererseits mit dem Grundkörper (1) über eine reine Kunststoffstruktur eine feste Verbindung erzielt wird wobei über den Einsatz wenigstens zwei verschiedener Kunststoffe (A oder B) zudem Anbindungselemente (6, 7) für Funktionselemente angespritzt werden, und die verschiedenen Kunststoffinaterialien (A oder B) den verschiedenen Kunststoffteilen einen festen Verbund miteinander ermöglichen indem diese beim Aufeinandertreffen im Bi-Injektionsverfahren miteinander verschmelzen.

10. Verwendung eines Querträgermoduls zur Anbringung unter der Instrumententafel eines Kraftfahrzeugs umfassend einen Grundkörper (1), bevorzugt einen rohrförmigen Grundkörper, aus Metall oder einem hochfesten Kunststoffmaterial, bevorzugt aus Metall, der zumindest bereichsweise mit Kunststoff (A oder B) umgeben ist und einem als Lenkstockhalter (2) fungierenden, einfach geformten Blechprofil das so konstruiert und platziert wird, dass es im Verbund mit angespritztem Kunststoff eine steife Verbindung einerseits zwischen Lenkstock und Stirnwand ergibt und andererseits mit dem Grundkörper (1) über eine reine Kunststoffstruktur fest verbunden ist wobei über den Einsatz wenigstens zweier verschiedener Kunststoffe (A oder B) zudem Anbindungselemente (6,7) für Funktionselemente angespritzt werden und die verschiedenen Kunststoffmaterialien (A oder B) den verschiedenen Kunststoffteilen einen festen Verbund miteinander ermöglichen indem diese beim Aufeinandertreffen im Bi-Injektionsverfahren miteinander verschmelzen zur Beeinflussung des Eigenschwingverhaltens des Instrumententafelträgers im Einbauzustand auf eine erste Eigenfrequenz > 36 Hz.

## Claims

1. Transverse-member motor-vehicle module for receiving the instrument panel of a motor vehicle using a plastics-metal-hybrid design comprising at least one partially plastics (A, B)-surrounded main body (1) composed of metal or of a high-strength plastics material, preferably in tubular form, and a simply moulded sheet-metal profile (3) functioning as steering-column retainer (2) and designed and placed in such a way that it, in the composite with at least one plastic (A) or (B) to be moulded on, firstly gives a stiff connection between steering column and front wall and secondly has firm connection to the main body (1) or, respectively, to the main body (1) by way of a structure consisting entirely of plastic, **characterized in that** by way of the use of at least two different plastics (A, B) moreover link elements (6, 7) for functional elements are simultaneously moulded on, and the various plastics materials (A, B) permit secure bonding of the various plastics parts (4, 5) to one another, **in that** the melt fronts of the various plastics materials (A, B) fuse with one another when they encounter one another in the bi-injection moulding process.

2. Transverse-member motor-vehicle module according to Claim 1, **characterized in that** the plastics structure has reinforcing ribs.

3. Transverse-member motor-vehicle module according to Claim 2, **characterized in that** the reinforcing ribs have been securely connected to the sheet-metal profile (3, 4, 5) at discrete connection sites by way of perforations in the sheet-metal profile (3, 4, 5), where the plastic extends through the perforations and extends over the surfaces of the perforations.

4. Transverse-member motor-vehicle module according to Claims 1 to 3, **characterized in that** thermoplastic polymers are used as plastic.

5. Transverse-member motor-vehicle module according to Claim 4, **characterized in that** thermoplastic polymers from the group of the polyamides, polyesters or polypropylene or any possible mixture of said polymers are used.

6. Transverse-member motor-vehicle module according to Claim 4 or 5, **characterized in that** at least one of the thermoplastic polymers comprises from 0.001 to 75 parts by weight of a filler or reinforcing material.

7. Transverse-member motor-vehicle module according to any of Claims 1 to 6, **characterized in that** the sheet-metal profile (4, 5) and/or the main body (1) has been coated with adhesion promoter or adhesive.

8. Transverse-member motor-vehicle module according to any of Claims 1 to 7, **characterized in that**, in a separate process step, only after the overmoulding process, the sheet-metal profile (4, 5) is connected to the plastics structure via hot-riveting or other types of riveting, clinching, adhesive bonding, or screw-thread methods, in addition to its other connection effected by the injection procedure.

9. Process for influencing the intrinsic vibration behaviour of the instrument-panel support of motor vehicles in the installed condition to give a first-mode natural frequency >36 Hz, **characterized in that** a transverse-member module is attached under the instrument panel of a motor vehicle, composed of at least one partially plastics (A, B)-surrounded main body (1) composed of metal or of a high-strength plastics material, preferably in tubular form, and a simply moulded sheet-metal profile functioning as steering-column retainer (2) and designed and placed in such a way that, in the composite with at least one plastic (A or B) to be moulded on, firstly a stiff connection results between steering column and front wall and secondly firm connection to the main body (1) is achieved by way of a structure consisting entirely of plastic, where, by way of the use of at least two different plastics (A or B) moreover link elements (6, 7) for functional elements are moulded on, and the various plastics materials (A or B) permit secure bonding of the various plastics parts to one another, **in that** the various plastics materials (A or B) fuse with one another when they encounter one another in the bi-injection moulding process.

10. Use of a transverse-member module for attachment under the instrument panel of a motor vehicle, comprising an at least partially plastics (A or B)-surrounded main body (1), preferably a tubular main body, composed of metal or of a high-strength plastics material, preferably composed of metal, and a simply moulded sheet-metal profile functioning as steering-column retainer (2) and designed and placed in such a way that it, in the composite with moulded-on plastic, firstly gives a stiff connection between steering column and front wall and secondly has firm connection to the main body (1) by way of a structure consisting entirely of plastic, where, by way of the use of at least two different plastics (A or B) moreover link elements (6, 7) for functional elements are moulded on, and the various plastics materials (A or B) permit secure bonding of the various plastics parts to one another, in that the various plastics materials (A or B) fuse with one another when they encounter one another in the bi-injection moulding process, for influencing the intrinsic vibration behaviour of the instrument-panel support in the installed condition to give a first-mode natural frequency >36 Hz.

## Revendications

1. Module de traverse pour un véhicule automobile, destiné à recevoir le tableau de bord d'un véhicule automobile en mode hybride plastique-métal, comprenant au moins un corps de base (1) en métal ou en une matière plastique à haute résistance, de préférence en forme de tube, qui est localement enrobé de matière plastique (A, B) et un profilé en tôle (3) de forme simple faisant office de support de colonne de direction (2), qui est conçu et placé de telle manière qu'il forme d'une part, en combinaison avec au moins une matière plastique à projeter (A) ou (B), une liaison rigide entre la colonne de direction et une paroi frontale et qu'il soit d'autre part assemblé fixement au corps de base (1) ou au corps de base (1) au moyen d'une structure purement de matière plastique, **caractérisé en ce que**, par l'emploi d'au moins deux matières plastiques différentes (A, B), on projette en plus simultanément des éléments de fixation (6, 7) pour des éléments fonctionnels et les matières plastiques différentes (A, B) permettent pour les différentes pièces de matière plastique (4, 5) un assemblage solide l'une à l'autre, du fait que les fronts de fusion des différentes matières plastiques (A, B) fusionnent l'un avec l'autre lors de la rencontre dans le procédé de double injection.

2. Module de traverse pour un véhicule automobile selon la revendication 1, **caractérisé en ce que** la structure de matière plastique présente des nervures de renforcement.

3. Module de traverse pour un véhicule automobile selon la revendication 2, **caractérisé en ce que** les nervures de renforcement sont reliées solidement au profilé de tôle (3, 4, 5), en des points de liaison discrets, au moyen de passages traversant celui-ci à travers lesquels la matière plastique passe et arrive au-dessus des surfaces des passages.

4. Module de traverse pour un véhicule automobile selon les revendications 1 à 3, **caractérisé en ce que** l'on utilise comme matière plastique des polymères thermoplastiques.

5. Module de traverse pour un véhicule automobile selon la revendication 4, **caractérisé en ce que** l'on utilise des polymères thermoplastiques de la série des polyamides, polyesters ou polypropylènes ou des mélanges possibles desdits polymères.

6. Module de traverse pour un véhicule automobile selon les revendications 4 ou 5, **caractérisé en ce qu'**au moins un des polymères thermoplastiques contient 0,001 à 75 parties en poids d'une matière de charge ou de renforcement.

7. Module de traverse pour un véhicule automobile selon l'une quelconque des revendications 1 à 6, **caractérisé en ce que** le profilé en tôle (4, 5) et/ou le corps de base (1) est revêtu d'un agent adhésif ou d'une colle.

8. Module de traverse pour un véhicule automobile selon l'une quelconque des revendications 1 à 7, **caractérisé en ce que** le profilé en tôle (4, 5) n'est assemblé qu'après l'enrobage, dans une étape séparée, par rivetage, rivetage à chaud, rivetage à clin, collage ou vissage, à la structure de matière plastique en plus de son assemblage réalisé de toute façon par l'opération de projection.

9. Procédé pour influencer le comportement de vibrations propres du tableau de bord de véhicules automobiles sur une première fréquence propre > 36 Hz à l'état monté, **caractérisé en ce que** l'on conçoit et on place un module de traverse à poser en dessous du tableau de bord d'un véhicule automobile composé d'au moins un corps de base (1) en métal ou en une matière plastique à haute résistance, de préférence sous forme de tube, qui est enrobé localement avec une matière plastique (A, B), et un profilé en tôle de forme simple faisant office de support de colonne de direction (2), de telle manière qu'il en résulte d'une part, en combinaison avec au moins une matière plastique à projeter (A) ou (B), une liaison rigide entre la colonne de direction et une paroi frontale et que l'on produise d'autre part un assemblage fixe au corps de base (1) au moyen d'une structure purement de matière plastique, dans lequel, par l'emploi d'au moins deux matières plastiques différentes (A ou B), on projette en plus des éléments de fixation (6, 7) pour des éléments fonctionnels et les matières plastiques différentes (A ou B) permettent pour les différentes pièces de matière plastique un assemblage solide l'une à l'autre, du fait que celles-ci fusionnent l'une avec l'autre lors de la rencontre dans le procédé de double injection.

10. Utilisation d'un module de traverse à poser en dessous du tableau de bord d'un véhicule automobile, comprenant un corps de base (1), de préférence un corps de base en forme de tube, en métal ou en une matière plastique à haute résistance, de préférence en métal, qui est enrobé au moins localement de matière plastique (A ou B), et un profilé en tôle de forme simple faisant office de support de colonne de direction (2), qui est conçu et placé de telle manière qu'il forme d'une part, en combinaison avec la matière plastique projetée, une liaison rigide entre la colonne de direction et une paroi frontale et qu'il soit d'autre part assemblé fixement au corps de base (1) au moyen d'une structure purement de matière plastique, dans lequel, par l'emploi d'au moins deux matières plastiques différentes (A ou B), on projette en plus des éléments de fixation (6, 7) pour des éléments fonctionnels et les matières plastiques différentes (A ou B) permettent pour les différentes pièces de matière plastique un assemblage solide l'une à l'autre, du fait que celles-ci fusionnent l'une avec l'autre lors de la rencontre dans le procédé de double injection pour influencer le comportement de vibrations propres du tableau de bord à l'état monté à une première fréquence propre > 36 Hz.
